# EUROPÄISCHE PATENTSCHRIFT

(11) **EP 2 741 970 B1**
(45) Veröffentlichungstag und Bekanntmachung des Hinweises auf die Patenterteilung: **09.09.2015**
(21) Anmeldenummer: 12728215.0
(22) Anmeldetag: 13.06.2012
(51) Int. Cl.: B65D 51/22, B65D 75/58, B29C 65/08

(54) **KUNSTSTOFFVERSCHLUSSVORRICHTUNG FÜR SCHLAUCHBEUTEL**
PLASTIC CLOSURE DEVICE FOR TUBULAR BAGS
DISPOSITIF DE FERMETURE EN PLASTIQUE POUR SACHET TUBULAIRE

(30) Priorität: 12.08.2011 DE 102011080923
(43) Veröffentlichungstag der Anmeldung: 18.06.2014
(73) Patentinhaber: Robert Bosch GmbH, 70442 Stuttgart (DE)
(72) Erfinder: BARRON, Dan, CH-8200 Schaffhausen (CH)
(86) Internationale Anmeldenummer: PCT/EP2012/061145
(87) Internationale Veröffentlichungsnummer: WO 2013/023808

(56) Entgegenhaltungen:
- WO-A1-2007/030965
- WO-A1-2007/030965
- WO-A2-01/36276
- WO-A2-2007/149231
- JP-A- 2000 085 800
- US-A1- 2010 215 294
- US-B2- 7 757 892

## Beschreibung

Die vorliegende Erfindung betrifft eine Kunststoffverschlussvorrichtung für Schlauchbeutel mit einem Unterteil umfassend einen Ausguss und einen Flansch mit einer Flanschunterseite auf welcher eine Energieeinleitanordung angeordnet ist, welche mit einer Kunststoffschicht mittels Ultraschallschweissen verbindbar ist, wobei die Energieeinleitanordung mindestens eine konzentrisch zum Flanschrand verlaufende Energieleitrippe umfasst.

### Stand der Technik

Kunststoffverschlussvorrichtungen für Schlauchbeutel, welche in der Fachsprache meist Pouches genannt werden, sind in unterschiedlichen Ausführungsformen bekannt. Die Kunststoffverschlussvorrichtungen umfassen in der Regel einen direkt auf den Schlauchbeutel befestigten Unterteil und eine auf dem Unterteil lösbar befestigte Schraubkappe zum Verschliessen eines Ausgusses im Unterteil. Zur Befestigung der Kunststoffverschlussvorrichtungen wird ein Flansch des Unterteiles auf dem Kunststofffolienmaterial des Schlauchbeutels unlösbar stoffschlüssig durch Ultraschallschweissen befestigt. Diese Schweissverbindung wird entweder direkt zwischen Flanschunterseite und der Kunststofffolie des Schlauchbeutels oder zwischen Flanschunterseite und einem Kunststoffflicken, der eine gestanzte Öffnung in der Kunststofffolie des Schlauchbeutels verschliesst, ausgeführt.

Solche Lösungen zeigen beispielsweise da Dokument JP-2000016453, wobei hier zwei konzentrisch zum Flanschrand verlaufende Energieleitrippen gezeigt sind, während das Dokument JP-2000344264 eine gleiche Kunststoffverschlussvorrichtung für Schlauchbeutel zeigt, bei dem lediglich eine konzentrisch zum Rand des Flansches verlaufende Energieleitrippe vorhanden ist.

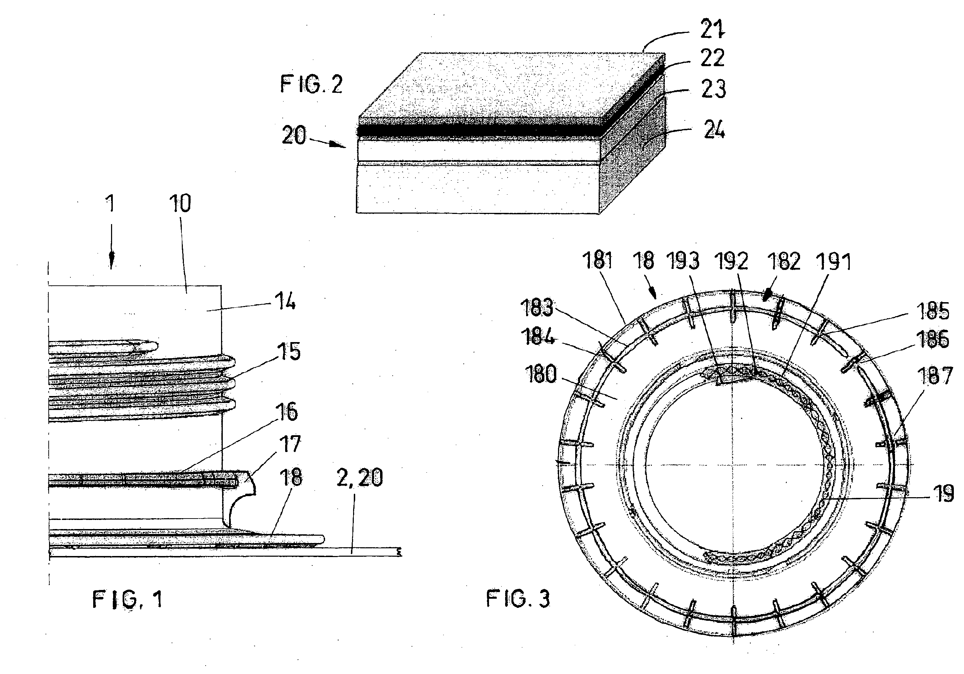

Aus der WO 2007/030965 A1 ist bereits eine Verschlussvorrichtung für geschlossene Behältnisse aus Kunststofffolie bekannt. Falls der spundförmige Unterteil 2 mit der Verpackung schweißverbunden werden soll, kann die Unterseite 25 mit Energieleitrippen 26 versehen sein, wie in Figur 1 andeutungsweise eingezeichnet. So haben sich insbesondere zwei Ausführungsformen der Energieleitrippen als geeignet herausgestellt, die entweder radial von innen nach außen fluchtend oder konzentrisch verlaufend angeordnet sind. Diese beiden Versionen lassen sich auch kombinieren.

Die Gestaltung der Energieleitrippen erfolgt immer mit der Zielsetzung eine bestmögliche Verbindung zwischen dem Flansch des Unterteiles der Kunststoffverschlussvorrichtung und dem Schlauchbeutel zu erzielen. Die Resultate solcher Schweissungen werden getestet. Dabei geht man heute von zwei verschiedenen Test aus, nämlich als erstes von einem sogenannten Zugtest, bei dem man den Flansch der Kunststoffverschlussvorrichtung senkrecht zur Ebene welche die Folie aufspannt, abzureissen versucht. Der zweite heute übliche Test nennt sich Twisttest und hierbei wird die Folie auf die die Kunststoffverschlussvorrichtung aufgeschweisst ist, festgehalten und die Kunststoffverschlussvorrichtung ein Drehmoment ausgeübt bis zur Zerstörung beziehungsweise Ablösung der Kunststoffverschlussvorrichtung von der Kunststofffolie des Schlauchbeutels. Rein zufällig hat die Anmelderin festgestellt, dass bei Versuchspaarungen die die beiden genannten Tests zur absoluten Zufriedenheit bestanden haben man mit relativ geringer Kraft mit dem Fingernagel unter den Flansch fahren kann und dann den Verschluss relativ leicht durch kippen von der Kunststofffolie trennen kann.

Nachdem man dieses bisher unbekannte Phänomen weiter untersucht hat, hat man festgestellt, dass dieses Phänomen lediglich bei Schlauchbeuteln aus mehrlagigen Kunststofffolien auftrat. Getestet wurden mehrlagige Kunststofffolien mit dem folgenden Aufbau:
PP - AL - PE sowie PP - PETSiOx - PE. Bei all diesen mehrlagigen Kunststofffolien haben die Versuche gezeigt, dass bei diesen Kippversuchen praktisch eine Delaminierung stattfindet, ähnlich einer Aluminiumfolie, die sich von einem Kunststoffbecher auf dem die Folie aufgeschweisst ist abtrennen lässt. Ebenso zeigen Folien die zusätzlich noch eine Kartonlage aufweisen dieselbe Problematik. Viele, aufwendige Versuchsreihen wurden durchgeführt um verbesserte Resultate zu erzielen. Die gefundene Lösung ist an sich äusserst einfach zu realisieren und umso mehr überraschend, dass diese zum gewünschten Resultat führt. Eine physikalische Erklärung kann diesseits nicht mit Sicherheit geliefert werden.

Es ist folglich die Aufgabe der vorliegenden Erfindung eine verbesserte Schweissverbindung zwischen einer Kunststoffverschlussvorrichtung und einem Schlauchbeutel aus mehrlagigen Kunststofffolien gemäss Oberbegriff des Patentanspruches 1 zu schaffen. Diese Aufgabe löst ein Schlauchbeutel aus mehrlagigen Kunststofffolien mit einer Kunststoffverschlussvorrichtung gemäß dem Patentanspruch 1.

Weitere vorteilhafte Ausgestaltungsformen des Erfindungsgegenstandes gehen aus den abhängigen Ansprüchen hervor und deren Bedeutung und Wirkungsweise wird in der nachfolgenden Beschreibung unter Bezugnahme auf die beiliegenden Zeichnungen erläutert.

Es zeigt:
- Figur 1: zeigt eine Teilansicht einer Kunststoffverschlussvorrichtung aufgeschweisst auf einer mehrlagigen Kunststofffolie;
- Figur 2: dient der Erläuterung des Aufbaus der hier interessierenden Kunststofffolien und
- Figur 3: zeigt eine Ansicht von unten auf einer Kunststoffverschlussvorrichtung mit Blick auf die Flanschunterseite dieser Kunststoffverschlussvorrichtung.
- Figur 4: zeigt symbolisch dargestellt den Aufbau einer Zugtestanordnung, während
- Figur 5: ebenfalls symbolisch eine Twisttestanordnung darstellt und letztlich zeigt
- Figur 6: eine sogenannte Peeltestanordnung bei dem das Kippmoment ermittelt wird, welches zur Trennung der Kunststoffverschlussvorrichtung von der mehrlagigen Kunststofffolie eines Schlauchbeutels ermittelt wird.

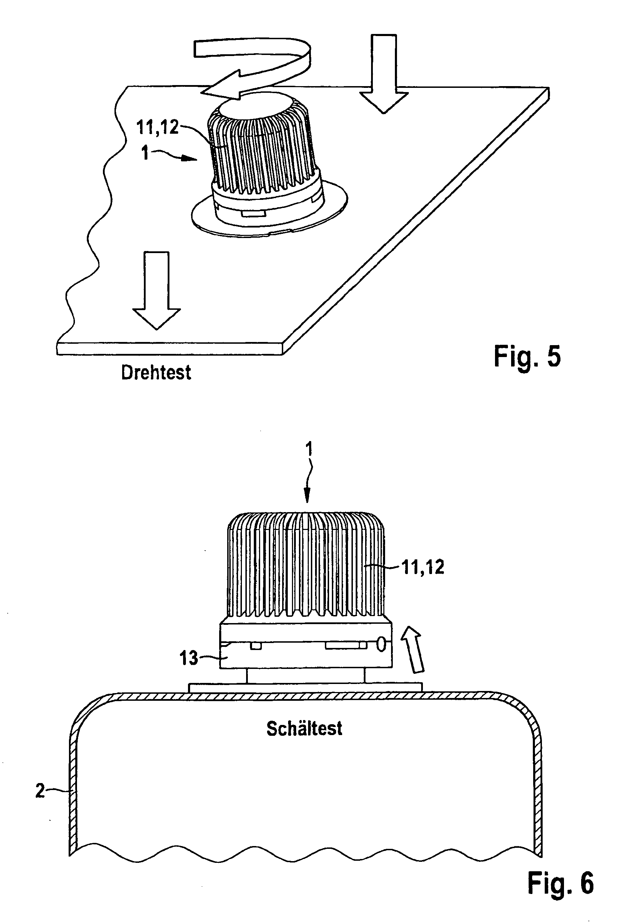

Die Kunststoffverschlussvorrichtung die in den Figuren 5 und 6 in der Gesamtheit in seitlicher Ansicht erkennbar ist und in der Figur 3 von unten ersichtlich ist, wird insgesamt mit 1 bezeichnet. Diese Kunststoffverschlussvorrichtung 1 dient dazu auf einen Schlauchbeutel 2 angebracht zu werden. Hierbei kann der Schlauchbeutel 2 vollständig aseptisch geschlossen sein oder eine gestanzte Öffnung aufweisen, die von der Kunststoffverschlussvorrichtung 1 verschlossen wird. Die Gestaltung des Schlauchbeutels 2 ist dabei unerheblich. Daher ist auf die Darstellung des Schlauchbeutels 2 in seiner Gesamtheit verzichtet worden. Lediglich in der Figur 6 ist der Schlauchbeutel 2 symbolisch in einer Teilansicht dargestellt.

In der Figur 1 ist eine Teilansicht der Kunststoffverschlussvorrichtung 1 teilweise ersichtlich. Hier wurde lediglich der Unterteil 10 der Kunststoffverschlussvorrichtung 1 dargestellt. Die Kunststoffverschlussvorrichtung 1 umfasst aber mindestens auch noch einen Oberteil 11, der üblicherweise als Schraubkappe 12 realisiert ist. Diese Schraubkappe 12 ist mit einem Garantieband 13 versehen, welches fluchtend unter der Mantelwand der Schraubkappe 12 angeordnet und mit dieser über Sollbruchstellenbrücken verbunden ist. Der Unterteil 10 umfasst einen Ausguss 14, der als zylindrischer Rohrabschnitt gestaltet ist. Der Ausguss 14 ist mit einem Aussengewinde 15 versehen zur Schraubverbindung mit einem hier nicht dargestellten Innengewinde der Schraubkappe 12. Unterhalb des Aussengewindes 15 ist eine umlaufende Rückhaltewulst 16 distanziert oberhalb eines am Ausguss 14 randständig angeformten Flansches 18 angebracht. Diese Rückhaltewulst 16 dient der formschlüssigen Verbindung einer entsprechenden Ausformung am Garantieband 13. Zusätzlich sind hier auch noch Rückhaltenocken 17 erkennbar, die zwischen der Schraubkappe 12 und dem Garantieband 13 hindurchzugreifen vermögen.

Ist der Schlauchbeutel 2 als aseptisch geschlossener Schlauchbeutel gestaltet, so muss die Kunststoffverschlussvorrichtung 1 zusätzlich mit einer Öffnungsvorrichtung 19 versehen sein. Eine solche Öffnungsvorrichtung ist in der Figur 3 erkennbar. Die Öffnungsvorrichtung 19 ist üblicherweise im Ausguss 14 schraubbar gehalten. Hierbei handelt es sich im Wesentlichen um einen zylindrischen Rohrabschnitt, der beidseitig offen ist und an seinem unteren, im eingebauten Zustand zum Flansch 18 des Unterteiles 10 gerichteten, eine mit Zähnen 191 versehene Schneidkante 192 hat. Die Öffnungsvorrichtung weist auf der Innenseite mindestens einen Mitnehmer 193 auf, auf den ein hier nicht ersichtlicher Mitnehmer in der Schraubkappe 12 angreift und dabei bei der Erstöffnung die Öffnungsvorrichtung 19 in einer Schraubbewegung versetzt und hierbei die mehrlagige Kunststofffolie des Schlauchbeutels 2 aufschneidet.

Der Schlauchbeutel 2 besteht aus einer mehrlagigen Kunststofffolie. Diese mehrlagige Kunststofffolie ist in Figur 2 im vergrösserten Massstab als geschnittene Probe dargestellt. Die mehrlagige Kunststofffolie wird insgesamt mit 20 bezeichnet. Der Aufbau dieser Kunststofffolie ist die folgende:
Zu Äusserst ist eine Kunststofflage 21. Diese ist über eine Klebschicht 22 mit einer Sperrschicht 23 verbunden. Diese Sperrschicht ist wiederum mit einer inneren Kunststofflage 24 verbunden.

Die äussere Kunststofflage besteht bevorzugterweise aus einem Polypropylen (PP), insbesondere aus einem ortho-Polypropylen (oPP). Mit der Sperrschicht 23 wird ein entsprechender Lichtschutz erzielt und sie muss aus Aluminium (AL) gefertigt werden. Ist ein solcher Lichtschutz nicht erforderlich oder nicht erwünscht so kann stattdessen ein Silikon eingelagertes Polyethylenterephthalat (PETSiOx) verwendet werden. Die innerste Kunststofflage 24 besteht üblicherweise aus einem Polyethylen. Die hier dargestellten Dicken der Materialschichten sind lediglich als Relativangabe zu betrachten, die aber keineswegs zwingend sein müssen. Es ist jedoch vorteilhaft die äussere Polypropylenschicht möglichst dünn zu wählen um die Flexibilität des Schlauchbeutels zu erhalten.

Das tatsächlich Erfindungswesentliche ist in der Figur 3 ersichtlich. Hier ist die Flanschunterseite 180 des Flansches 18 voll einsehbar. Der Flansch 18 wird von einem äusseren Rand 181 begrenzt. Auf der Flanschunterseite sind eine Vielzahl von Energieleitrippen angebracht. Die Gesamtheit aller Energieleitrippen wird als Energieeinleitanordung 182 bezeichnet.

Die Energieeinleitanordung 182 besteht einerseits aus einer an sich bekannten konzentrisch zum äusseren Rand des Flansches 181 verlaufende Energieleitrippe 183. Diese, mindestens eine konzentrische Energieleitrippe 183 kreuzt mit einer Vielzahl nach aussen gerichtet verlaufenden Energieleitrippen 184. Diese nach aussen gerichtet verlaufenden Energieleitrippen 184 erstrecken sich bis zum peripheren Flanschrand 181.

Statt der mindestens einen konzentrisch zum äusseren Rand des Flansches 181 verlaufenden Energieleitrippe 183 können auch mehrere, insbesondere zwei oder drei konzentrische Energieleitrippen 183 vorhanden sein. Die nach aussen gerichtet verlaufenden Energieleitrippen 184 wird man bevorzugt radial verlaufend anordnen. Die Energieleitrippen können aber auch von der radialen Richtung abweichend nach aussen gerichtet verlaufend angeordnet sein. Die Anzahl der verschiedenen Energieleitrippen beziehungsweise die Dichte deren Anordnung wird der Fachmann so wählen, dass genügend Material schmilzt um eine einwandfreie Verschweissung zu erzielen, andererseits aber dies auch so optimieren, dass nicht ungebührlich viel Material erweicht werden muss, was automatisch mit einem erhöhten Energieverbrauch verbunden wäre. Um Beispielsweise nicht allzu grosse Konzentrationen an erweichtem Material an gewissen Stellen zu erhalten, können die Kreuzungsbereiche 185 der Energieleitrippen 183, 184 verschieden gestaltet sein. Bei 185 schneiden sich die konzentrisch verlaufende Energieleitrippe und die radial verlaufende Energieleitrippe tatsächlich, während bei 186 die konzentrisch verlaufende Energieleitrippe im somit virtuellen Kreuzungsbereich 186 unterbrochen ist, während die radial verlaufende Energieleitrippe durchgehend verläuft. Alternativ kann der Kreuzungsbereich auch so gestaltet sein, dass die konzentrisch verlaufende Energieleitrippe durchgehend ist, während die radial nach aussen verlaufende Energieleitrippe in diesem ebenfalls virtuellen Kreuzungsbereich 187 unterbrochen ist. Wie erwähnt wird hiermit eine unnötige und unerwünschte örtliche Anhäufung von geschmolzenem Material verhindert.

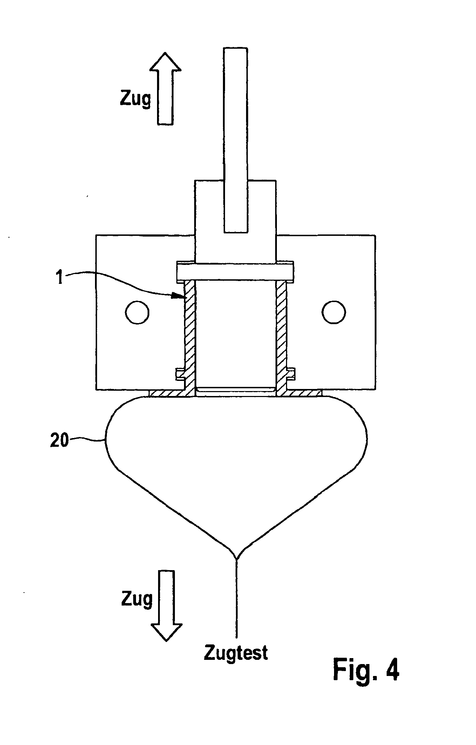

Die Figur 4 zeigt nun in symbolischer Weise eine Versuchsanordnung für einen Zugversuch. Hierbei wird jene Kraft gemessen, die erforderlich ist um die auf einer mehrlagigen Kunststofffolie aufgeschweisste Kunststoffverschlussvorrichtung von dieser Folie abzureissen. Dieser Versuch wird üblicherweise als Zugversuch bezeichnet.

In der Figur 5 erkennt man eine plan aufgespannte mehrlagige Kunststofffolie 20 während auf die Kunststoffverschlussvorrichtung 1 ein Drehmoment ausgeübt wird. Hier wird jenes Drehmoment ermittelt, welches benötigt wird um eine Abscherung des Flansches von der mehrlagigen Kunststofffolie zu bewirken. Letztlich ist in der Figur 6 lediglich symbolisch ein Kippversuch dargestellt. Wie in Realität ein solcher Kippversuch durchgeführt werden soll, wurde diesseits noch nicht festgelegt. Die Versuche wurden bisher rein manuell und subjektiv durchgeführt. In dieser Figur 6 ist zudem der Schlauchbeutel 2 mindestens teilweise dargestellt.

Weshalb die Resultate mit der neuen, erfindungsgemässen Energieleitrippenanordnung erstaunlicherweise wesentlich besser sind, kann diesseits nur spekuliert werden. Bei der Ultraschallschweissung drückt eine Sonotrode auf die Oberfläche des Flansches der Kunststoffverschlussvorrichtung. Durch die erzeugten Ultraschallschwingungen wird zwischen der Folie und den Energieleitrippen eine Reibung erzeugt, die zum Schmelzen des Kunststoffes führt. Bisher ging man davon aus, dass dabei das geschmolzene Material unter dem Druck der Sonotrode in alle Richtungen gleichmässig strömen würde. Um möglichst wenig Masse bewegen zu müssen und somit auch möglichst wenig Energie verwenden zu müssen, hat man die Dicke des Flansches immer weiter reduziert. Hierdurch findet eine Konzentration an Material in Richtung des Zentrums statt. Daher geht man davon aus, dass im peripheren Bereich des Flansches stärkere Schwingungen auftreten als im zentrischen Bereich des Flansches. Hierdurch wird eine Strömung zum Zentrum hin begünstigt. Um nunmehr trotz dieses Phänomens eine einwandfreie Verschweissung zu erzielen, hat man durch Versuche die vorliegende Anordnung der Energieleitrippen gefunden.

Bei den Kipp- beziehungsweise Peeltests, wie in der Figur 6 dargestellt, hat man festgestellt, dass bei den bisherigen Lösungen der Anordnung der Energieleitrippen die Mehrheit aller auf solche Schlauchbeutel angebrachten Kunststoffverschlussvorrichtungen mit geringem Kraftaufwand abkippen beziehungsweise abschälen konnte. Hierbei zeigte es sich, dass zwar die äussere Kunststofffolienlage 21 meist am Flansch haften bleibt, während diese sich jedoch von der Klebschicht 22 oder der Sperrschicht 23 praktisch abschält. Es kann daher durchaus auch sein, dass bei den bisher üblichen Anordnung der Energieleitrippen, nämlich Anordnungen bei denen lediglich konzentrisch verlaufende Energieleitrippen vorhanden sind der eigentliche Schmelzvorgang auf eine geringere Fläche erfolgt und der Fliessvorgang des Kunststoffes wesentlich langsamer ist als dies bisher erwartet wurde, oder aber gewisse Energiekonzentrationen auftreten die zu diesem Schäleffekt führen. Auf jeden Fall hat sich dieses Problem mit der erfindungsgemässen Anordnung der Energieleitrippen gelöst.

## Patentansprüche

1. Schlauchbeutel (2) aus mehrlagiger Kunststofffolie mit einer Kunststoffverschlussvorrichtung (1) umfassend einen Unterteil (10) mit einem Ausguss (14) und einem Flansch (18) auf dessen Flanschunterseite (180) eine Energieeinleitanordnung (182) angeordnet ist, die mit einer Kunststoffschicht des Schlauchbeutels (2) verbunden ist, wobei die Energieeinleitanordnung (182) mindestens eine konzentrisch zum peripheren Flanschrand verlaufende Energieleitrippe (183) aufweist, wobei die mindestens eine konzentrische Energieleitrippe (183) mit einer Vielzahl nach aussen gerichtet verlaufenden Energieleitrippen (184), die sich bis zum peripheren Flanschrand (181) erstrecken, sich kreuzen, **dadurch gekennzeichnet, dass** die Energieleitrippen (184) an ihren umlaufenden Kuppen mit einem Radius im Querschnitt gerundet ausgestaltet sind, und daran anschliessend in nach aussen geneigten Flanschen (18) übergehen, wobei die Erhebungsmaxima eine in etwa punktuelle Auflage bilden.

2. Schlauchbeutel (2) mit Kunststoffverschlussvorrichtung (1) nach Anspruch 1, **dadurch gekennzeichnet, dass** die nach aussen verlaufenden Energieleitrippen (184) radial nach aussen gerichtet sind und die mindestens eine konzentrische Energieleitrippe (183) kreuzen.

3. Schlauchbeutel (2) mit Kunststoffverschlussvorrichtung (1) nach Anspruch 2, **dadurch gekennzeichnet, dass** die Flanschoberseite oberhalb des Bereiches in dem die Energieleitrippen(183) angeordnet sind frei zugänglich ist.

4. Schlauchbeutel (2) mit Kunststoffverschlussvorrichtung (1) nach Anspruch 3, **dadurch gekennzeichnet, dass** die im Querschnitt ersichtlichen Flanken der Energieleitrippen (183) einen Winkel (α) von 50° bis 70°, bevorzugt von 60°, einschliessen.

5. Schlauchbeutel (2) mit Kunststoffverschlussvorrichtung (1) nach Anspruch 1, **dadurch gekennzeichnet, dass** die Kuppen der Energieleitrippen (184) zu im Querschnitt gesehen etwa punktuellen Auflagen der Energieleitrippen ausgestaltet sind.

6. Schlauchbeutel (2) mit Kunststoffverschlussvorrichtung (1) nach Anspruch 1, **dadurch gekennzeichnet, dass** die Höhe (h) der Energieleitrippen (183) zwischen 0.2 bis 0.4 mm, bevorzugt 0.3 mm beträgt.

7. Schlauchbeutel (2) mit Kunststoffverschlussvorrichtung (1) nach Anspruch 1, **dadurch gekennzeichnet, dass** die Flanschunterseite (180) in einem Randbereich an die äussere Energieleitrippe (183) anschliessend in Richtung Flanschoberseite gekrümmt ist.

8. Schlauchbeutel (2) mit Kunststoffverschlussvorrichtung (1) nach Anspruch 1, **dadurch gekennzeichnet, dass** die nach aussen gerichtete verlaufenen Energieleitrippen (184) im Kreuzungsbereich (185) unterbrochen sind, so dass diese um mindestens die Breite einer Energieleitrippe von der mindestens eine konzentrische verlaufende Energieleitrippe (183) im virtuellen Kreuzungsbereich (185) distanziert sind.

9. Schlauchbeutel (2) mit Kunststoffverschlussvorrichtung (1) nach Anspruch 1, **dadurch gekennzeichnet, dass** die mindestens eine konzentrische verlaufende Energieleitrippe (183) im virtuellen Kreuzungsbereich (185) unterbrochen ist.

10. Schlauchbeutel (2) mit Kunststoffverschlussvorrichtung (1) nach Anspruch 1, **dadurch gekennzeichnet, dass** der Schlauchbeutel (2) aus einer mehrlagigen Kunststofffolie (20) besteht, welche einer der folgenden Schichtkombinationen aufweist:
PP - AL - PE
PP - MPET - PE
PP - PETSiOx - PE

11. Schlauchbeutel (2) mit Kunststoffverschlussvorrichtung (1) nach Anspruch 1, **dadurch gekennzeichnet, dass** die Kunststoffverschlussvorrichtung (1) aus PP besteht.

## Claims

1. Tubular bag (2) consisting of multilayer plastic film, having a plastic closure device (1) comprising a bottom part (10) having a spout (14) and a flange (18), an energy introduction arrangement (182), which is connected to a plastic layer of the tubular bag (2), being located on the flange underside (180) of said flange, wherein the energy introduction arrangement (182) has at least one energy-conducting rib (183) which extends concentrically with respect to the peripheral flange rim, wherein the at least one concentric energy-conducting rib (183) intersects a multiplicity of energy-conducting ribs (184) which extend and are oriented outwardly and which extend as far as the peripheral flange rim (181), **characterized in that** the energy-conducting ribs (184) are designed with a rounded cross section having a radius on their encircling round ends and subsequently merge with outwardly inclined flanges (18), the maximum elevations forming an approximately punctiform support.

2. Tubular bag (2) having a plastic closure device (1) according to Claim 1, **characterized in that** the outwardly extending energy-conducting ribs (184) are radially oriented toward the outside and intersect the at least one concentric energy-conducting rib (183).

3. Tubular bag (2) having a plastic closure device (1) according to Claim 2, **characterized in that** the flange top side is freely accessible above the region in which the energy-conducting ribs (183) are located.

4. Tubular bag (2) having a plastic closure device (1) according to Claim 3, **characterized in that** the flanks of the energy-conducting ribs (183), which flanks are evident in the cross section, enclose an angle (α) of 50° to 70°, preferably of 60°.

5. Tubular bag (2) having a plastic closure device (1) according to Claim 1, **characterized in that** the round ends of the energy-conducting ribs (184) are designed, when viewed in cross section, as approximately punctiform supports of the energy-conducting ribs.

6. Tubular bag (2) having a plastic closure device (1) according to Claim 1, **characterized in that** the height (h) of the energy-conducting ribs (183) measures between 0.2 and 0.4 mm, preferably 0.3 mm.

7. Tubular bag (2) having a plastic closure device (1) according to Claim 1, **characterized in that** the flange underside (180) is curved toward the flange top side in a peripheral region which is adjacent to the outer energy-conducting rib (183).

8. Tubular bag (2) having a plastic closure device (1) according to Claim 1, **characterized in that** the energy-conducting ribs (184), which extend and are oriented outwardly, are interrupted in the intersecting region (185), such that they are spaced at a distance which is equal to at least the width of one energy-conducting rib from the at least one concentrically extending energy-conducting rib (183) in the virtual intersecting region (185).

9. Tubular bag (2) having a plastic closure device (1) according to Claim 1, **characterized in that** the at least one concentrically extending energy-conducting rib (183) is interrupted in the virtual intersecting region (185).

10. Tubular bag (2) having a plastic closure device (1) according to Claim 1, **characterized in that** the tubular bag (2) consists of a multilayer plastic film (20) which has one of the following combinations of layers:
PP - AL - PE
PP - MPET - PE
PP - PETSiOx - PE

11. Tubular bag (2) having a plastic closure device (1) according to Claim 1, **characterized in that** the plastic closure device (1) consists of PP.

## Revendications

1. Sachet tubulaire (2) en un film de matière plastique multicouches avec un dispositif de fermeture (1) en matière plastique comprenant une partie inférieure (10) avec un bec (14) et une bride (18) sur la face inférieure (180) de bride de laquelle est placé un agencement d'introduction d'énergie (182) qui est relié avec une couche de matière plastique du sachet tubulaire (2), l'agencement d'introduction d'énergie (182) comportant au moins une nervure de guidage d'énergie (183) s'étendant de manière concentrique vers le bord périphérique de la bride, l'au moins une nervure de guidage d'énergie (183) concentrique se croisant avec une pluralité de nervures de guidage d'énergie (184) s'écoulant en étant dirigées vers l'extérieur, qui s'étendent jusqu'au bord périphérique (181) de la bride, **caractérisé en ce que** sur leurs calottes périphériques, les nervures de guidage d'énergie (184) sont conçues en étant arrondies avec un rayon dans la section transversale et dans la suite, passent dans des brides (18) inclinées vers l'extérieur, les maxima d'élévation formant un appui approximativement ponctuel.

2. Sachet tubulaire (2) avec un dispositif de fermeture (1) en matière plastique selon la revendication 1, **caractérisé en ce que** les nervures de guidage d'énergie (184) s'écoulant vers l'extérieur sont orientées en direction radiale vers l'extérieur et croisent l'au moins une nervure de guidage d'énergie (183) concentrique.

3. Sachet tubulaire (2) avec un dispositif de fermeture (1) en matière plastique selon la revendication 2, **caractérisé en ce que** la face supérieure de la bride est librement accessible au-dessus de la zone dans laquelle sont placées les nervures de guidage d'énergie (183).

4. Sachet tubulaire (2) avec un dispositif de fermeture (1) en matière plastique selon la revendication 3, **caractérisé en ce que** les flancs visibles dans la section transversale des nervures de guidage d'énergie (183) forment un angle (α) de 50° à 70°, de préférence de 60°.

5. Sachet tubulaire (2) avec un dispositif de fermeture (1) en matière plastique selon la revendication 1, **caractérisé en ce que**, vues en section transversale, les calottes des nervures de guidage d'énergie (184) sont conçues en tant qu'appuis approximativement ponctuels des nervures de guidage d'énergie.

6. Sachet tubulaire (2) avec un dispositif de fermeture (1) en matière plastique selon la revendication 1, **caractérisé en ce que** la hauteur (h) des nervures de guidage d'énergie (183) est de 0,2 à 0,4 mm, de préférence de 0,3 mm.

7. Sachet tubulaire (2) avec un dispositif de fermeture (1) en matière plastique selon la revendication 1, **caractérisé en ce que** dans une zone de bordure, à la suite de la nervure de guidage d'énergie (183) extérieure, la face inférieure (180) de la bride est recourbée en direction de la face supérieure de la bride.

8. Sachet tubulaire (2) avec un dispositif de fermeture (1) en matière plastique selon la revendication 1, **caractérisé en ce que** les nervures de guidage d'énergie (184) s'écoulant en étant dirigées vers l'extérieur sont interrompues dans la zone de croisement (185), de sorte qu'elles sont écartés d'au moins la largeur d'une nervure de guidage d'énergie de l'au moins une nervure de guidage d'énergie (183) s'écoulant de manière concentrique, dans la zone de croisement (185) virtuelle.

9. Sachet tubulaire (2) avec un dispositif de fermeture (1) en matière plastique selon la revendication 1, **caractérisé en ce que** l'au moins une nervure de guidage d'énergie (183) s'écoulant de manière concentrique est interrompue dans la zone de croisement (185) virtuelle.

10. Sachet tubulaire (2) avec un dispositif de fermeture (1) en matière plastique selon la revendication 1, **caractérisé en ce que** le sachet tubulaire (2) est constitué d'un film de matière plastique (20) multicouches qui présente l'une des associations de couches suivantes :
PP - AL - PE
PP - MPET - PE
PP - PETSiOx - PE

11. Sachet tubulaire (2) avec un dispositif de fermeture (1) en matière plastique selon la revendication 1, **caractérisé en ce que** le dispositif de fermeture (1) en matière plastique est en PP.
